# EUROPEAN PATENT APPLICATION

(11) **EP 2 119 798 A2**
(43) Date of publication of application: **18.11.2009**
(21) Application number: 09460017.8
(22) Date of filing: 22.04.2009
(51) Int. Cl.: C13F 3/02, A23G 3/02, A23L 1/00, A23G 3/00, A23L 1/221, C13F 5/00

(54) **The method and unit for aromatic-taste sugar cubes production**

(30) Priority: 08.05.2008 PL 38512408
(71) Applicant: Zawislak, Henryk, 72-420 Dziwnowek (PL)
(72) Inventor: Zawislak, Henryk, 72-420 Dziwnowek (PL)
(74) Representative: Kachnic, Tadeusz

(57) **Abstract**

The subject of the invention is a method and unit for aromatic and taste sugar cubes production.

The method, wherein granulated sugar is mixed with one or several spices in amount from 0, 01 to 15% gravimetric and/or at least one type of fruit concentrate in amount from 0, 01 to 15% gravimetric, then it is sprinkled with water or juices, or with aromatic liquids, until humidity of 1, 5 to 4% is reached, during condensation process forming cubes with of any shape, and then said cubes are dried in temperature from 90° C, advantageously in 75°C, for period of 0,1 - 05 h.

The unit, wherein on top horizontal arm of c-rails shape frame /1/ there is situated a tank /2/, containing mixer /3/ with a feeder /4/ situated underneath, wherein above the tank /2/ there is a sprinkling tank /5/. On the frame /1/ at the height of the feeder /4/ on a rotatory actuator /7/ there is situated a controlling box /6/, on a middle arm /8/ of the frame /1/ there is embedded a rotatory table /9/ with a linear vibrator /10/ situated on cushions /11/, where then a form /12/ is mounted containing line of holes /13/ forming cubes/20/, locked from the top with a tray/14/. On a lower arm of the frame /1/ there is an actuator /15/, with a collecting table /16/ containing collecting trays /14/, after 180 degrees turning of the rotatory table /9/ with the frame, formed sugar cubes are placed on the collecting tray /14/.

## Description

The subject of the invention is a method and unit for aromatic -taste sugar cubes production, used as appendage to hot drinks, designed to enrich taste experience.

Commonly known method of production of pure sugar cubes designed to sweeten inter alia coffee and tea, consist of forming on presses sugar cubes in form of cube.

Along with habit propagation of drinking hot wine and other hot drinks, apart from adding sugar to enrich aromatic and taste experience for drinkers of hot drinks, exist a need of introducing various appendages in form of spices, fruit concentrate and others.

The purpose of the invention is to develop a method of producing sugar cubes containing particular appendages, enriching aromatic and taste experiences while drinking hot drinks.
The method of production of aromatic - taste sugar cubes according to the invention, wherein granulated sugar is mixed with one or several spices in amount from 0, 01 to 15% gravimetric and/or at least one type of fruit concentrate in amount from 0, 01 to 15% gravimetric, then it is sprinkled with water or juices, or with aromatic liquids, until humidity of 1, 5 to 4% is reached, during condensation process forming cubes with of any shape, and then said cubes are dried in temperature from 90° C, advantageously in 75°C, for period of 0,1 - 05 h.

Advantageously according to the invention is to mix sugar with cinnamon and/or cloves and/or ginger and/ or cardamom and/or nutmeg and/or pepper, in any combination, configuration, composition and relation.

Advantageously according to the invention is to mix sugar with dried and ground fruits.

Advantageously according to the invention, during process of mixing components preservatives are added and/or regulator and/or vitamins.

Advantageously according to the invention, during process of forming sugar cubes, the substance is formed into shape close to a rotary figures, pyramids and conics.

Condensation process is executed during linear vibration process of defined frequency and intensity of vibration.

The unit for production of aromatic -taste sugar cubes with appendages according to the invention, wherein on top horizontal arm of c-rails shape frame there is situated a tank , containing mixer with a feeder situated underneath, wherein above the tank there is a sprinkling tank. On the frame at the height of the feeder on a rotatory actuator there is situated a controlling box, on a middle arm of the frame there is embedded a rotatory table with a linear vibrator situated on cushions, where then a form is mounted containing a line of holes forming cubes, locked from the top with a tray. On a lower arm of the frame there is an actuator, with a collecting table containing collecting trays, after 180 degrees turning of the rotatory table with the frame, formed sugar cubes are placed on the collecting tray.

Advantageously according to the invention is that beside the collecting table a transporter with a heating tunnel is situated, and at the end of transporter there is a trolley.

The form has holes in shape of cone or cut cone.

The form has holes in shape of spherical cap.

The form has holes in shape of cylinder.

The form has holes in shape of cigar.

### Example I

On mixture used for production of sugar cubes 20 in cone shape, consist granulated sugar in amount of 96,59 % mixed with 0,97 % gravimetric of cinnamon, received mixture is sprinkled with 2,44% gravimetric amount of water. Next the mixture from a feeder 4 is poured on holes 13 in form 12, and said mixture in cone shape holes 13, of form 12 undergoes forming and condensation process for period of 0,1 h. After condensation of sugar cubes 20 with appendages a vibrating table with form 12, locked from the top with a tray 14, are relocated 180 degree downward with the rotatory actuator 7, onto collecting table 16 situated on a transporter 17. The tray 14 with formed sugar cubes 20 is relocated with the transporter 17 through a stove 18. Formed sugar cubes are dried in the stove 18 for 0,2 h in temperature of 75°C.

### Example II

On mixture used for production of sugar cubes 20 in cylinder shape, consist of 90% gravimetric granulated sugar mixed with cinnamon in amount of 2% gravimetric, 3% gravimetric of ground cloves, 3% gravimetric of ground dried oranges, and 2% gravimetric of water.

### Example III

On mixture used for production of sugar cubes 20 in cylinder shape, consist of 95.80% gravimetric granulated sugar mixed with cinnamon in amount of 1.5% gravimetric and 0,5% gravimetric of ground cloves, 0,2% gravimetric of cardamom and 2% gravimetric of water.

Sugar cube with spices produced with method according to the invention, can be used to sweeten tea, hot wine with caramelization process of sugar cube during its burning, additionally after soaking of the sugar cube with alcoholic beverages such cube can be used as a component of a drink.

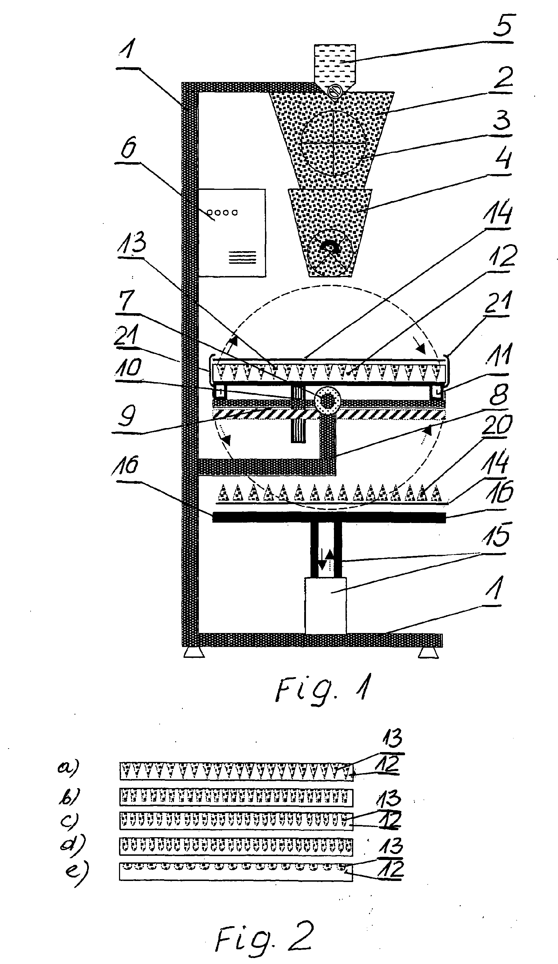

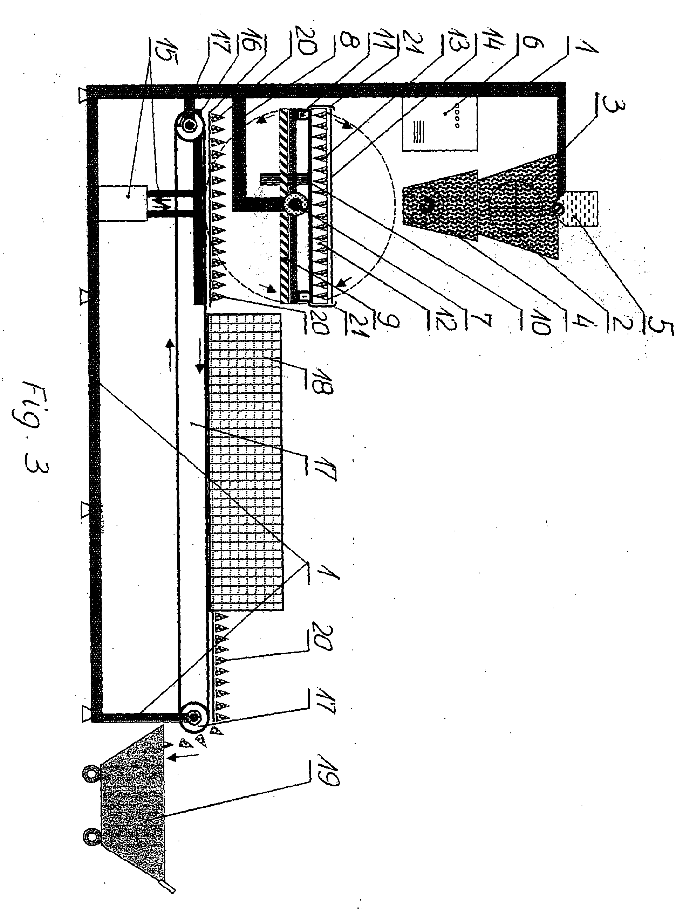

The subject of the invention in form of the unit has been shown in drawing example, where fig. 1 - shows unit in side view, fig. 2- shows five types of forms with various shapes of holes forming sugar cubes with appendages, fig. 3 - shows the unit in side view with the transporter.

The unit contains a frame 1 with c-rails shape. On top horizontal arm of the frame 1 there is set a tank 2 containing mixer 3 with a feeder 4 situated underneath. Above the tank 2 there is a sprinkling tank 5, and on frame 1 at the height of the feeder 4 there is a control box 6. On rotatory actuator 7, mounted on a middle arm 8 of the frame 1, there is a vibrating table 9 situated with linear vibrator 10 situated on two cushions 11, where on the other hand a form 12 is mounted, containing line of holes 13 forming cubes and locked from the top with a tray 14. The tray 14 is mounted with holders 21. Whereas on the lower arm of the frame 1 there is an actuator situated 15, where collecting table 16 is mounted with collecting trays 14 and sugar cubes 20 with appendages, after 180 degrees turning of the rotatory table 9 with the frame, formed sugar cubes 20 are placed on the collecting tray 14.

Second example of realization of the invention shows unit, where beside the collecting table 16 there is a transporter 17 situated, on top of which there is a heating tunnel 18, at the end of the transporter 17 there is a trolley 19. The form 12 has cone shape holes 13.

## Claims

1. The method of production of aromatic-taste sugar cubes, wherein granulated sugar is mixed with one or several spices in amount from 0, 01 to 15% gravimetric and/or at least one type of fruit concentrate in amount from 0, 01 to 15% gravimetric, then it is sprinkled with water or juices, or with aromatic liquids, until humidity of 1, 5 to 4% is reached, during condensation process forming cubes with of any shape, and then said cubes are dried in temperature from 90° C, advantageously in 75°C, for period of 0,1 - 05 h.

2. The method according to Claim 1, wherein the sugar is mixed with cinnamon and/or cloves and/or ginger and/ or cardamom and/or nutmeg and/or pepper, in any combination, configuration, composition and relation.

3. The method according to Claim 1, wherein the sugar is mixed with dried and ground fruits.

4. The method according to Claims 1 and 2, wherein preservative and/or regulators and/or vitamins are added.

5. The method according to Claim 1, wherein during process of forming into sugar cubes, the substance is formed into shape close to a rotary figures, pyramids and conics.

6. The method according to Claim 1, wherein condensation is occurs during linear vibration process with defined frequency and intensity of vibrations.

7. The unit for production of aromatic - taste sugar cubes with appendages according to the invention, wherein on top horizontal arm of c-rails shape frame /1/ there is situated a tank /2/, containing mixer /3/ with a feeder /4/ situated underneath, wherein above the tank /2/ there is a sprinkling tank /5/. On the frame /1/ at the height of the feeder /4/ on a rotatory actuator /7/ there is situated a controlling box /6/, on a middle arm /8/ of the frame /1/ there is embedded a rotatory table /9/ with a linear vibrator /10/ situated on cushions /11/, where then a form /12/ is mounted containing a line of holes /13/ forming cubes /20/, locked from the top with a tray/14/. On a lower arm of the frame /1/ there is an actuator /15/, with a collecting table /16/ containing collecting trays /14/, after 180 degrees turning of the rotatory table /9/ with the frame, formed sugar cubes are placed on the collecting tray /14/.

8. The method according to Claim 7, wherein beside the collecting table /16/ there is a transporter /17/, on top of which there is a heating tunnel /18/, at the end of the transporter /17/ there is a trolley /19/.

9. The method according to Claim 7, wherein from /12/ has holes /13/ in shape of cone.

10. The method according to Claim 7, wherein from /12/ has holes /13/ in shape of spherical cap.

11. The method according to Claim 7, wherein from /12/ has holes /13/ in shape of cylinder.

12. The method according to Claim 7, wherein from /12/ has holes /13/ in shape of cut cone.

13. The method according to Claim 7, wherein from /12/ has holes /13/ in shape of cigar.
